Europäisches Patentamt

European Patent Office

Office européen des brevets

(19)

(11) Veröffentlichungsnummer : **0 101 968**
**B1**

(12) **EUROPÄISCHE PATENTSCHRIFT**

(45) Veröffentlichungstag der Patentschrift :
02.11.89

(21) Anmeldenummer : 83107577.5

(22) Anmeldetag : 01.08.83

(51) Int. Cl.⁴ : **B 42 D 15/02**

(54) Ausweiskarte mit im Auf- und Durchlicht prüfbaren Merkmalen und Verfahren zu ihrer Herstellung.

(30) Priorität : 24.08.82 DE 3231460

(43) Veröffentlichungstag der Anmeldung :
07.03.84 Patentblatt 84/10

(45) Bekanntmachung des Hinweises auf die Patenterteilung : 02.11.89 Patentblatt 89/44

(84) Benannte Vertragsstaaten :
AT BE CH DE FR GB IT LI LU NL SE

(56) Entgegenhaltungen :
EP--A-- 0 059 856
EP--A-- 0 064 782
AU--A--  488 652
DE--A-- 2 842 972
FR--A-- 2 365 657
FR--E--  92 448
US--A-- 3 604 901
US--A-- 3 884 554
US--A-- 3 967 400

(73) Patentinhaber : GAO Gesellschaft für Automation und Organisation mbH
Euckenstrasse 12
D-8000 München 70 (DE)

(72) Erfinder : Haghiri-Tehrani, Yahya
Winzererstrasse 98
D-8000 München 40 (DE)

(74) Vertreter : Klunker, Hans-Friedrich, Dr. et al
Patentanwälte Klunker . Schmitt-Nilson . Hirsch Winzererstrasse 106
D-8000 München 40 (DE)

**Beschreibung**

Die Erfindung betrifft ein Verfahren zur Herstellung einer Ausweiskarte mit einem ohne Hilfsmittel visuell erkennbaren Echtheitsmerkmal, dessen Hell-Dunkel-Kontrast sich vom Auflicht zum Durchlicht ändert, bestehend aus mindestens zwei im späteren Verbund aneinandergrenzenden Schichten aus Kunststoff unterschiedlicher Lichtdurchlässigkeit, von denen die eine Schicht transparent und die andere transluzent ist und wobei zur Ausbildung des visuell erkennbaren Echtheitsmerkmals die innere Grenzfläche zwischen diesen Kunststoffschichten eine Reliefstruktur in Form von Zeichen, Mustern etc. aufweist.

Aus der DE-C-29 01 150 ist eine Ausweiskarte aus Kunststoff bekannt, die im Auf- und Durchlicht prüfbare Merkmale trägt. Dazu ist eine Trägerschicht der Ausweiskarte mit mehreren Druckschichten versehen, die sich teilweise überlagern und ein Muster darstellen, in dem die Flächenbereiche, in denen sich die Druckschichten überlagern, im Auflicht heller als ihre Umgebung, im Durchlicht jedoch dunkler als ihre Umgebung erscheinen. Die bedruckte Trägerschicht kann mit einer oder mehreren Kunststoffolien kaschiert werden.

Bei dieser Ausweiskarte ist die Realisierung mehrerer Helligkeitsabstufungen mit mehreren Druckvorgängen verbunden. Außerdem sollten Druckfarben verwendet werden, die sich gut mit den betreffenden Schichten der Ausweiskarte verbinden.

Aus der US-A-3 604 901 ist eine Kreditkarte mit einer maschinenlesbaren Codierung bekannt. Diese Codierung ist in Form einer Lochanordnung in einer im Kartenverbund enthaltenen lichtundurchlässigen Schicht eingebracht. Da eine derartige Lochcodierung normalerweise die Stabilität der Karte beeinträchtigt, wird hier nun vorgeschlagen, daß angrenzend an diese Informationsschicht eine transluzente Schicht mit einem geringeren Erweichungspunkt eingelagert wird, deren Material bei der Laminierung der Karte unter Anwendung von Wärme und Druck in die Löcher der Informationsschicht einwandert. Da die Löcher damit gefüllt sind, hat die Karte ihre gewünschte Stabilität.

Die Lichtdurchlässigkeit dieser Informationsschicht und der weicheren Zwischenschicht ist so gewählt, daß die Lochanordnung bei normaler Betrachtung nicht zu erkennen ist und erst mit Hilfe fotoelektischer Prüfgeräte abtastbar ist. Die in der US-PS beschriebene Lochcodierung einer Karte ist also ein rein maschinenlesbares Merkmal der Karte.

Eine ältere, nicht vorveröffentlichte, Patentanmeldung (EP-A-0 059 856) beschreibt eine Ausweiskarte mit einem visuell wahrnehmbaren Sicherheitsmerkmal, wobei zur Herstellung des Sicherheitsmerkmals aber folgender Weg beschritten wird.

In eine opake Kunststoffschicht wird ein Positivrelief und in eine transparente Kunststoffschicht das hierzu entsprechende Negativrelief eingeprägt. Diese beiden beiden Kunststoffolien werden nun mit ihren Reliefoberflächen aufeinander ausgerichtet zu einem Verbund laminiert. An den Stellen, an denen die opake Schicht eine größere Dicke aufweist, erscheinen diese in der Durchsicht als dunkle Bereiche, während an den Stellen kleinerer Dicke in Durchsicht eine Aufhellung bemerkbar ist. Damit können Kunststoffkarten mit einem visuell prüfbaren Sicherheitsmerkmal ausgestattet werden, das von außen unzugänglich ist.

Nachteilig bei diesem Verfahren ist nun, daß beide Kunststoffolien mit den entsprechenden Positiv- und Negativmuster geprägt werden müssen und daß zur Laminierung dieser Karten beide Schichten passergenau in Deckung gebracht werden müssen.

Die Aufgabe der Erfindung besteht darin, ein Verfahren zur Herstellung einer Ausweiskarte aus Kunststoff anzugeben, die ein im Auf- und Durchlicht prüfbares Merkmal aufweist und das eine rationelle Herstellung gestattet, ohne daß dadurch die Nachahmung des Merkmals erleichtert wird.

Die Aufgabe wird durch die in den unabhängigen Ansprüchen 1 und 4 enthaltenen Merkmale gelöst.

Eine nach diesem Verfahren hergestellte Ausweiskarte ist Gegenstand des Anspruchs 7.

Gemäß der vorliegenden Erfindung wird nun gegenüber der Lehre der EP-A-0 059 856 vorgeschlagen, lediglich eine der Schichten mit einem Relief zu versehen und bei der Laminierung so vorzugehen, daß sich eine zweite Schicht unterschiedlicher Lichtdurchlässigkeit während des Laminiervorgangs an die Reliefstruktur der ersten Schicht angepaßt und dabei die Vertiefungen im Relief ausgefüllt werden. Da das «Negativrelief» also erfindungsgemäß bei der Verbindung beider Schichten selbst erzeugt wird, erübrigen sich die bei dem älteren Verfahren notwendige doppelte Prägung und die passergenaue Justierung beider Folien, wodurch das Herstellverfahren wesentlich vereinfacht wird.

Aus der GB-A-565 708 ist es zwar bekannt, zur Herstellung von Banknoten aus Kunststoff Aussparungen in einer Kunststoffschicht mit einem gefärbten Füllmaterial zur Darstellung von Zeichen (beispielsweise Banknotenwert) zu versehen, wobei ein so dargestelltes Zeichen noch durch eine abdeckende Folie geschützt werden kann.

Auf diese Weise können zwar Zeichen in einen Kunststoffträger sichtbar eingebracht werden, eine Kontrastumkehr bei Betrachtung im Auflicht und Durchlicht kann dadurch jedoch nicht erreicht werden.

Bei der erfindungsgemäßen Ausweiskarte werden Vertiefungen in einer Schicht mit dem Material einer angrenzenden Schicht gefüllt, so daß nach der Kaschierung beide Schichten lokal in der Dicke variieren. Wenn eine dieser Schichten gegenüber der anderen Schicht eine geringere Transparenz aufweist, wird im Auflicht ein Licht-Schatten-Effekt erzeugt, der sich im Durchlicht umkehrt.

Das durch die Form der Vertiefungen eingebrachte Muster kann sehr fein strukturiert sein, wodurch die Nachahmung des Musters zusätzlich erschwert wird, obwohl der eigentliche Fertigungsprozeß jedoch weiterhin rationell bleibt.

In bestimmten Bereichen können z. B. die Vertiefungen nur teilweise gefüllt sein. In Abhängigkeit von den Materialeigenschaften und den Bedingungen bei der Herstellung der Karte wird es dadurch möglich, die Muster oder Zeichen totalreflektierend, stark glänzend oder auch matt auszubilden, wobei die matt ausgebildeten Oberflächen ein taktil fühlbares, in Kongruenz zur Struktur der Vertiefungen liegendes, Oberflächenrelief aufweisen können.

In einer Weiterbildung der Erfindung ist die sich verformende Schicht mit einem Aufdruck versehen, der sich ebenfalls in Abhängigkeit von den Vertiefungen in der angrenzenden Schicht plastisch verformt. Man erhält dadurch einem räumlichen Eindruck vom Druckbild, da es infolge der Verformung in verschiedenen Ebenen in der Ausweiskarte vorliegt. Mittels einer geeigneten Kombination des Druckbildes und der Struktur der Vertiefungen können eine Vielzahl optischer Effekte erreicht werden, wie z. B. verzerrte Linien oder Kennzeichen im Aufdruck, die nur unter bestimmten Winkeln zu beobachten sind.

Weitere Merkmale und Vorteile der Erfindung ergeben sich aus der nachfolgenden Beschreibung, in der Ausführungsformen der Erfindung anhand der beigefügten Zeichnung beschrieben sind.

Darin zeigen :

Fig. 1 ein Ausführungsbeispiel der erfindungsgemäßen Ausweiskarte bei Betrachtung im Auflicht,

Fig. 2 ein Ausführungsbeispiel der erfindungsgemäßen Ausweiskarte bei Betrachtung im Durchlicht,

Fig. 3, 4 die in den Fig. 1 und 2 gezeigte Ausweiskarte vor und nach der Laminierung,

Fig. 5, 6 eine weitere Ausführungsform einer Ausweiskarte vor bzw. nach der Laminierung,

Fig. 7, 8 eine Ausweiskarte mit eingelagertem Druckbild vor bzw. nach der Laminierung und

Fig. 9 eine Ausweiskarte mit Druckbild in der Aufsicht.

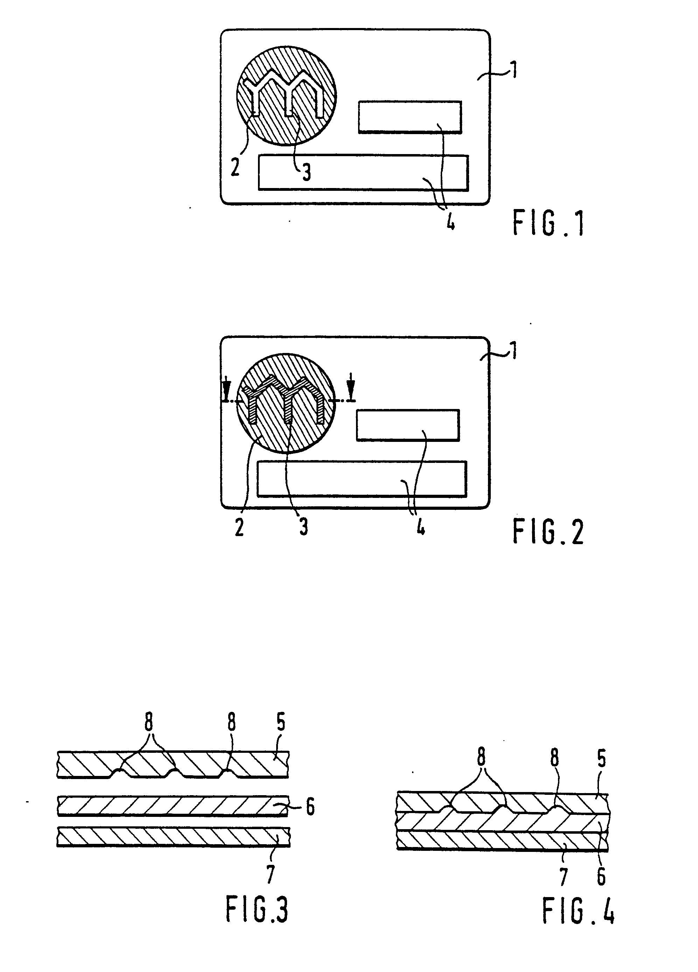

Die Fig. 1 und 2 zeigen in einer beispielhaften Ausführungsform eine Ausweiskarte, die neben den mit üblichen Informationen beschrifteten Feldern 4 ein Feld 2 mit einem gemäß der Erfindung gestalteten Muster 3 aufweist. Während die Fig. 1 das Muster 3 wiedergibt, wie es sich einem Betrachter im Auflicht darstellt, zeigt die Fig. 2 das gleiche Muster bei der Betrachtung im Durchlicht. Herstellung der Ausweiskarte und deren Aufbau im Bereich des Musters sowie Weiterbildungen der Erfindung werden nachfolgend erläutert.

Die Fig. 3 und 4 zeigen in Schnittdarstellungen die Ausweiskarte aus den Fig. 1 und 2 vor bzw. nach dem Laminieren. Die Karte besteht aus den Schichten 5, 6 und 7. Die Schicht 5 ist transparent und auf der zum Inneren der Karte gewandten Seite mit Vertiefungen 8 versehen, die bei der fertigen Karte das gewünschte Muster repräsentieren. Die Vertiefungen und damit auch das Muster können, obwohl in den Fig. nicht gezeigt, sehr fein und aufwendig strukturiert sein, wodurch deren Nachahmung stark erschwert bzw. unmöglich gemacht wird. Zur Herstellung solcher Vertiefungen oder Muster bieten sich mehrere Verfahren an, wovon hier beispielsweise die Präge-Gieß- oder auch Ätztechnik genannt seien. Die Kunststoffschicht 6 hat im Gegensatz zur Schicht 5 eine geringere Transparenz und ist beispielsweise weiß eingefärbt, während die Schicht 7 wiederum eine transparente Schicht sein kann.

Werden die Schichten 5, 6 und 7 nun unter Wärme und Druck laminiert, füllen sich die Vertiefungen 8 mit dem Material der an die Vertiefungen angrenzenden, weiß eingefärbten Schicht 6 (Fig. 4). Bei besonders fein strukturierten Vertiefungen bzw. Mustern, die auch nach dem Laminierprozeß in vollem Umfang bestehen bleiben sollen, wird für die Schicht 6 vorzugsweise ein Material verwendet, das gegenüber der Schicht 5 mit den Vertiefungen 8 eine geringere Erweichungstemperatur aufweist.

Betrachtet man die Karte im Auflicht, wie in Fig. 1 dargestellt, erscheinen die Bereiche des Feldes 2, in denen die Schicht 6 eine größere Dicke aufweist, heller bzw. farbintensiver als die Umgebung mit geringerer Schichtdicke, so daß sich das Muster 3 durch eine hellere Zeichnung von der Umgebung abhebt. Außerdem wird durch die plastische Verformung der Oberfläche der Schicht 6 und einem sich daraus ergebenden Licht-Schatten-Effekt ein räumlicher Eindruck erweckt. Im Durchlicht hingegen (siehe Fig. 2) erscheinen die verdickten Stellen infolge der verminderten Lichtdurchlässigkeit in diesen Bereichen dunkler als ihre Umgebung, so daß sich das Muster 3 in diesem Fall durch eine dunklere Zeichnung von der Umgebung abhebt. Damit weist die Karte ein Muster auf, das im Auf- und Durchlicht betrachtet eine Kontrastumkehrung zeigt. In dem erläuterten Ausführungsbeispiel ist die transparente Schicht 5 mit den das Muster repräsentierenden Vertiefungen ausgestattet. Es ist ebenso möglich, die Schicht 6 mit der geringeren Transparenz in einem Kartenlaminat mit entsprechenden Vertiefungen zu versehen. Außerdem kann auch eine Schicht des Kartenlaminats beidseitig mit Vertiefungen ausgestattet sein.

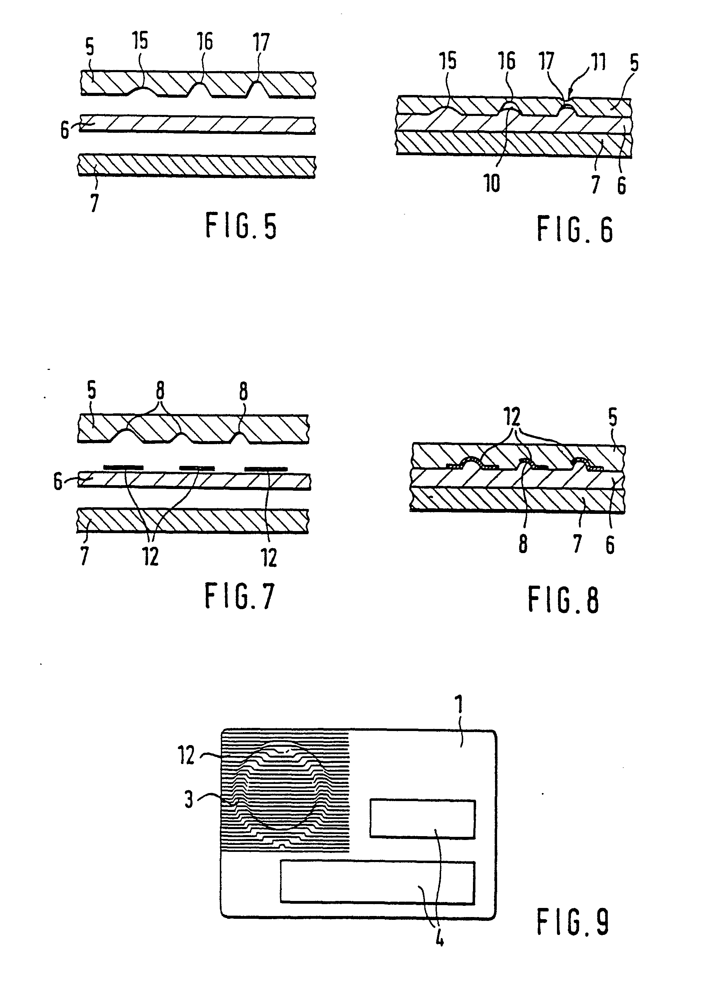

Die Fig. 5 und 6 zeigen den Schichtaufbau einer weiteren Ausführungsform der Erfindung vor und nach der Laminierung. Die Vertiefungen 15, 16, 17 der transparenten Schicht 5 sind in diesem Fall unterschiedlich stark ausgehöhlt. Die sich daraus bei der laminierten Karte ergebenden variablen Dickenunterschiede lassen das Muster sowohl im Auf- als auch im Durchlicht in mehreren Helligkeits- bzw. Farbsättigungsstufen erscheinen, die auch nahezu kontinuierlich ineinander übergehen können.

Weiterhin besteht bei dieser Ausführungsform durch die Auswahl entsprechender Schichtmaterialien und entsprechender Steuerung des Drucks der Kaschierzeit und der Temperatur während der Laminierung die Möglichkeit, die Vertiefungen zumindest in einem Bereich des Musters nur teilweise mit dem Material der angrenzenden Schicht auszufüllen. Bei der teilweisen Füllung der Vertiefungen 16, 17 beispielsweise entstehen, wie in Fig. 6 gezeigt, zwischen den Schichten 5 und 5 Hohlräume 10, die im Gegensatz zu vollständig gefüllten Vertiefungen, beispielsweise 15, unterschiedliche optische Effekte hervorrufen. Die Form der jeweiligen Grenzflächen der Schichten 5 und 6 und die unterschiedlichen Berechnungsindizes der Schichten und der Hohlräume können dazu führen, daß in diesen Bereichen das Licht total reflektiert wird, so daß die Ausweiskarte zumindest in Teilbereichen des Musters eine zum Muster kongruente glänzende Zeichnung aufweist. Beendet man den Kaschiervorgang, bevor die Folienvertiefungen vom Folienmaterial der angrenzenden Folie vollständig ausgefüllt sind oder reduziert man den Kaschierdruck im Bereich der Vertiefungen lokal derart, daß eine vollständige Ausfüllung der Musterbereiche verhindert wird, so ist neben der Erzeugung der dem Muster kongruenten Hohlräume im Karteninneren auch ein dem Muster ebenfalls kongruentes lokales Einsinken der Folienoberfläche zu erreichen. Diese auf der Kartenoberfläche fühlbaren Vertiefungen 11 (Fig. 6) heben sich insbesondere bei Verwendung von hochglänzenden Kaschierplatten von der sonst glatten Folienoberfläche als mattes Muster von ihrer Umgebung ab. Dieser Effekt ist ähnlich wie der bereits beschriebene Hell-Dunkel-Kippeffekt ebenfalls ohne zusätzliche Hilfsmittel im auf der Kartenoberfläche reflektierenden Licht als kartencharakteristische Eigenschaft einfach überprüfbar.

Schließlich zeigen die Figuren 7 und 8 eine Ausführungsform der Erfindung, bei der beispielsweise die mittlere Schicht 6, die gegenüber den anderen Schichten eine geringere Transparenz aufweist, mit einem Druckbild 12 versehen ist. Das Druckbild ist derart auf der Kunststoffschicht plaziert, daß es mit dem Material dieser Schicht in die Vertiefungen der angrenzenden Schicht gedrückt wird. Durch diese Verformung wird der räumliche Eindruck, den das Muster, wie erwähnt, ohnehin schon hervorruft, noch verstärkt. Die Fig. 9, in der eine Ausweiskarte in der Aufsicht dargestellt ist, vermittelt den räumlichen Effekt eines Druckbildes, das, wie oben beschrieben, durch die Vertiefungen in der Karte entsprechend verformt worden ist.

Die Vertiefungen in einer Kartenschicht können relativ zur Lage eines entsprechend ausgewählten Druckbildes so angeordnet sein, daß Teile des Druckbildes in eine, bezogen auf die Vorderseite der Karte, höhere Ebene geschoben werden. Bei einem bestimmten Betrachtungswinkel zur Karte sind dann nur die erhöhten Bereiche des Druckbildes zu sehen, während bei normaler Betrachtung das gesamte Druckbild sichtbar wird.

Es ist ebenso möglich, statt der Druckschicht beispielsweise eine elektrisch leitende oder eine magnetische Schicht vorzusehen, die bei der Laminierung einer Karte durch die Vertiefungen verformt wird. Die sich aus dieser Verformung ergebenden physikalischen Änderungen können beispielsweise zur Darstellung eines Codes verwendet werden, der mit Hilfe von kapazitiven Abtastern oder mittels eines Magnetkopfes abtastbar ist.

## Patentansprüche

1. Verfahren zur Herstellung einer Ausweiskarte mit einem ohne Hilfsmittel visuell erkennbaren Echtheitsmerkmal, dessen Hell-Dunkel-Kontrast sich vom Auflicht zum Durchlicht ändert, bestehend aus mindestens zwei im späteren Verbund aneinandergrenzenden Schichten aus Kunststoff unterschiedlicher Lichtdurchlässigkeit, von denen die eine Schicht transparent und die andere transluzent ist und wobei zur Ausbildung des visuell erkennbaren Echtheitsmerkmals die innere Grenzfläche zwischen diesen Kunststoffschichten eine Reliefstruktur in Form von Zeichen, Mustern etc. aufweist, bestehend aus mindestens folgenden Verfahrensschritten :

Einbringen einer Reliefstruktur entsprechend der gewünschten Zeichen und Muster in eine erste der Kunststoffschichten,

Anlagerung einer zweiten, nicht mit einer gegengleichen Reliefstruktur versehenen Kunststoffschicht an die Oberfläche der ersten Kunststoffschicht, die die Reliefstruktur trägt, wobei Material der zweiten Kunststoffschicht, in erweichten Zustand gebracht, in die Vertiefungen der Reliefstruktur der ersten Schicht einfließt und diese zumindest teilweise auffüllt und

Laminieren dieser Kartenschichten zu einem festen Verbund unter Anwendung von Wärme und Druck.

2. Verfahren nach Anspruch 1, dadurch gekennzeichnet, daß die Reliefstruktur in eine transparente Schicht eingebracht wird und die zweite Schicht eingefärbt ist.

3. Verfahren nach Anspruch 2, dadurch gekennzeichnet, daß die eingefärbte Kunststoffschicht eine geringere Erweichungstemperatur aufweist als die transparente, die Reliefstruktur aufweisende Schicht.

4. Verfahren zur Herstellung einer Ausweiskarte mit einem ohne Hilfsmittel visuell erkennbaren Echtheitsmerkmal, bestehend aus mindestens zwei aneinandergrenzenden Kunststoffschichten unterschiedlicher Lichtdurchlässigkeit, wobei zur Ausbildung des visuell erkennbaren Echtheitsmerkmals die innere Grenzfläche zwischen diesen Kunststoffschichten eine Reliefstruktur in Form von Zeichen, Mustern etc. aufweist, bestehend aus mindestens folgenden Verfahrensschritten :

Einbringen einer Reliefstruktur entsprechend der gewünschten Zeichen und Muster in eine erste der Kunststoffschichten,

Beschichten oder Bedrucken der zweiten Kunststoffschicht,

Anlagerung einer zweiten Kunststoffschicht mit ihrer bedruckten oder beschichteten Oberfläche an die Oberfläche der ersten Kunststoffschicht, die die Reliefstruktur trägt, wobei Material der zweiten Kunststoffschicht, in erweichten Zustand gebracht, in die Vertiefungen der Reliefstruktur der ersten Schicht einfließ, diese Vertiefungen zumindest teilweise aufgefüllt und dabei die Beschichtung oder Bedruckung entsprechend der Reliefstruktur verformt werden und

Laminieren dieser Kunststoffschichten zu einem festen Verbund unter Anwendung von Wärme und Druck.

5. Verfahren nach Anspruch 4, dadurch gekennzeichnet, daß die Beschichtung aus einem magnetischen oder elektrisch leitfähigem Material besteht.

6. Verfahren nach einem der Ansprüche 1-5, dadurch gekennzeichnet, daß die Form und Größe der Vertiefungen einerseits sowie Laminierbedingungen und Materialeigenschaften der Kunststoffschichten andererseits so aufeinander abgestimmt werden, daß das Material der einen Kunststoffschicht nicht völlig in die Vertiefungen der anderen Kunststoffschicht einfließt, so daß die Muster oder Zahl des Oberflächenreliefs als nicht glänzende matte Bereiche und/oder in Form eingeschlossener total reflektierender Lufträume fühlbar bzw. sichtbar werden.

7. Ausweiskarte mit einem ohne Hilfsmittel visuell erkennbaren Echtheitsmerkmal, bestehend aus mindestens zwei aneinandergrenzenden Kunststoffschichten unterschiedlicher Lichtdurchlässigkeit, wobei zur Ausbildung des visuell erkennbaren Echtheitsmerkmals die innere Grenzfläche zwischen diesen Kunststoffschichten eine Reliefstruktur in Form von Zeichen, Mustern etc. aufweist und wobei diese Schichten unter Anwendung von Wärme und Druck zu einem Verbund laminiert sind, und bei der wenigstens die zwei aneinandergrenzenden Kunststoffschichten unterschiedliche Erweichungspunkte aufweisen, wobei die Schicht mit dem höheren Erweichungspunkt eine lochfreie Reliefstruktur entsprechend den Mustern und Zeichen trägt und die Vertiefungen dieser Reliefstruktur vom Material der angrenzenden Kunststoffschicht mit dem niedrigen Erweichungspunkt wenigstens bis zu einem Teil ihrer Tiefe ausgefüllt sind.

8. Ausweiskarte nach Anspruch 7, dadurch gekennzeichnet, daß die Kunststoffschicht mit dem niedrigeren Erweichungspunkt eine Druckschicht oder eine Beschichtung aufweist, die entsprechend der Reliefstruktur verformt ist, und daß die Verformung der Druckschicht oder der Beschichtung durch die Kunststoffschicht mit der höheren Lichtdurchlässigkeit von der Außenseite der Karte her visuell sichtbar ist.

9. Ausweiskarte nach Anspruch 8, dadurch gekennzeichnet, daß die Beschichtung aus magnetischem oder elektrisch leitfähigem Material besteht.

## Claims

1. Process for producing an identity card having an authenticating feature which is visually recognisable without any auxiliary means, the light-dark contrast of which varies between incident light and transmitted light, consisting of at least two layers of plastics of different light transmittance which are positioned adjacent each other in the composite structure later formed, one of said layers being transparent whilst the other is translucent and, in order to form the visually recognisable authenticating feature, the inner interface between these plastics layers has a relief structure in the form of symbols, patterns, etc., consisting of at least the following steps :

the incorporation of a relief structure corresponding to the desired symbols and patterns in a first layer of plastics,

the application of a second plastics layer which is not provided with a mating relief structure to the surface of the first layer of plastics which carries the relief structure, so mat material from the second layer of plastics, brought into a softened state, flows into the depressions in the relief structure of the first layer and at least partially fills these depressions and

lamination of these layers of card to form a fixed composite structure with the application of heat and pressure.

2. Process according to claim 1, characterised in that the relief structure is incorporated in a transparent layer and the second layer is tinted.

3. Process according to claim 2, characterised in that the tinted layer of plastics has a lower softening temperature than the transparent layer which contains the relief structure.

4. Process for producing an identity card having an authenticating feature which is visually recognisable without any auxiliary means, consisting of at least two adjacent layers of plastic with different light transmittance, in which, in order to form the visually recognisable authenticating feature, the inner interface between these layers of plastics has a relief structure in the form of symbols, patterns, etc., consisting of at least the following steps :

the incorporation of a relief structure corresponding to the desired symbols and patterns in a first layer of plastics,

coating or printing of the second layer of plastics,

application of the second layer of plastics with a printed or coated surface to the surface of the first layer of plastics which carries the relief structure, so mat material from the second layer of plastics brought into a softened state flows into the depressions in the relief structure of the first layer, these depressions are at least partially filled and the coating or printing is deformed to correspond to the relief structure and

lamination of these layers of plastics to form a fixed composite structure with the application of heat and pressure.

5. Process according to claim 4 characterised in that the coating consists of a magnetic or electrically conductive material.

6. Process according to one of claims 1 to 5, characterised in that the shape and size of the depressions on the one hand and the laminating conditions and properties of the material of the plastics layers on the other hand are matched to one another so that the material in one layer of plastics does not flow completely into the depressions in the other layer of plastics, with the result that the patterns or number of the surface relief are detectable or visible as non-glossy matt areas and/or in the form of sealed-in fully reflective air spaces.

7. Identity card having an authenticating feature which is visually recognisable without auxiliary means, consisting of at least two adjacent layers of plastics of different light transmittance, wherein in order to produce the visually recognisable authenticating feature the inner interface between these layers of plastics has a relief structure in the form of symbols, patterns, etc. and these layers are laminated to form a composite structure with the application of heat and pressure, and wherein at least the two adjacent layers of plastics have different softening points, the layer with the higher softening point having a hole-free relief structure corresponding to the patterns and symbols and the depressions in this relief structure are filled, at least to part of their depth, by the material of the adjacent layer of plastics with the lower softening point.

8. Identity card according to claim 7 characterised in that the layer of plastics with the lower softening point has a printed layer or a coating which is deformed in accordance with the relief structure, and in that the deformation of the printed layer or the coating is visually recognisable through the layer of plastics with a higher light transmittance from the outside of the card.

9. Identity card to claim 8 characterised in that the coating consists of magnetic or electrically conducting material.

**Revendications**

1. Procédé de fabrication d'une carte d'identité comprenant une caractéristique d'authenticité vérifiable visuellement sans moyen auxiliaire, dont le contraste clair-sombre change en passant de la lumière incidente à la lumière en contre-jour, se composant d'au moins deux couches limitrophes en matière plastique présentant des transparences à la lumière différentes destinées à constituer ultérieurement un composite, dont l'une est transparente et l'autre est translucide et la surface limite intérieure située entre ces couches de matières plastiques présentant une structure en relief ayant la forme de caractères, de dessins, etc., dans le but de réaliser la caractéristique d'authenticité vérifiable visuellement, procédé se composant au moins des étapes suivantes consistant à :

introduire une structure en relief correspondant aux caractères et dessins souhaités dans une première des couches de matière plastique,

apposer une deuxième couche de matière plastique pourvue d'une structure en relief complémentaire sur la surface de la première couche de matière plastique, qui porte la structure en relief, la matière de la deuxième couche de matière plastique, qui est apportée à l'état ramolli, s'écoule dans les cavités de la structure en relief de la première couche et la remplit au moins partiellement et

stratifier ces couches de cartes pour constituer un composite rigide par utilisation de la chaleur et de la pression.

2. Procédé selon la revendication 1, caractérisé en ce que la structure en relief est introduite dans une couche transparente et en ce que la deuxième couche est colorée dans la masse.

3. Procédé selon la revendication 2, caractérisé en ce que la couche de matière plastique colorée dans la masse présente une température de ramollissement inférieure à la couche transparente comportant la structure en relief.

4. Procédé de fabrication d'une carte d'identité comprenant une caractéristique d'authenticité vérifiable visuellement sans moyen auxiliaire, se composant d'au moins deux couches limitrophes en matière plastique présentant des transparences à la lumière différentes, la surface limite intérieure située entre ces couches de matières plastiques présentant une structure en relief ayant la forme de caractères, de dessins, etc., dans le but de réaliser la caractéristique d'authenticité vérifiable visuellement, procédé se composant au moins des étapes suivantes consistant à :

introduire une structure en relief correspondant aux caractères et dessins souhaités dans une première des couches en matière plastique,

revêtir ou soumettre à l'impression la deuxième couche en matière plastique,

apposer une deuxième couche de matière plastique dont la surface imprimée ou revêtue est placée sur la surface de la première couche en matière plastique, qui porte la structure en relief, la matière de la deuxième couche en matière plastique, qui est apportée dans un état ramolli, s'écoule dans les cavités de la structure en relief de la première couche et remplit au moins partiellement ces cavités, le revêtement ou l'impression étant déformés en correspondance à la structure en relief, et

stratifier ces couches de matière plastique pour constituer un composite rigide par utilisation de la chaleur et de la pression.

5. Procédé selon la revendication 4, caractérisé en ce que le revêtement se compose d'une matière magnétique ou électriquement conductrice.

6. Procédé selon l'une des revendications 1 à 5, caractérisé en ce que la forme et les dimensions des cavités d'une part, ainsi que les conditions de stratification et les propriétés de la matière des couches en matière plastique d'autre part sont déterminées les unes par rapport aux autres de façon que la matière de l'une des couches en matière plastique ne s'écoule pas complètement dans les cavités de l'autre couche en matière plastique, de sorte que les dessins ou le nombre des reliefs de la surface soient visibles ou détectables comme des zones mates non brillantes et/ou sous forme d'espaces d'inclusion d'air à réflexion totale.

7. Carte d'identité présentant une caractéristique d'authentification vérifiable visuellement sans moyen auxiliaire, se composant d'au moins deux couches limitrophes en matière plastique présentant des transparences à la lumière différentes, la surface limite intérieure située entre ces couches en matière plastique présentant une structure en relief ayant la forme de caractères, de dessins, etc., dans le but de réaliser la caractéristique d'authenticité vérifiable visuellement, ces couches étant stratifiées en un composite par utilisation de la chaleur et de la pression, et dans laquelle au moins les deux couches de matières plastiques limitrophes présentent des points de ramollissement différents, la couche présentant le point de ramollissement le plus élevé portant une structure en relief exempte de trous et correspondant aux dessins et caractères, et les cavités de cette structure en relief étant remplies de la matière de la couche de matière plastique limitrophe ayant le point de ramollissement le plus bas, au moins jusqu'à une partie de leur profondeur.

8. Carte d'identité selon la revendication 7, caractérisée en ce que la couche de matière plastique présentant le point de ramollissement le plus bas comporte une couche imprimée ou un revêtement déformé en correspondance à la structure en relief, et en ce que la déformation de la couche imprimée ou du revêtement par la couche en matière plastique présentant la transparence à la lumière la plus élevée étant visible à l'oeil nu depuis le côté extérieur de la carte.

9. Carte d'identité selon la revendication 8, caractérisée en ce que le revêtement se compose d'une matière magnétique ou électriquement conductrice.

FIG.1

FIG.2

FIG.3

FIG.4

FIG.5

FIG.6

FIG.7

FIG.8

FIG.9